# EUROPEAN PATENT APPLICATION

(11) **EP 1 978 708 A1**
(43) Date of publication of application: **08.10.2008**
(21) Application number: 07764134.8
(22) Date of filing: 29.06.2007
(51) Int. Cl.: H04L 29/06

(54) **A SYSTEM, APPARATUS AND METHOD FOR TRANSMITTING DIGITAL SUBSCRIBER SIGNALING**

(30) Priority: 07.08.2006 CN 200610110574
(71) Applicant: Huawei Technologies Co., Ltd., Longgang District Shenzhen 518129 (CN)
(72) Inventor: MAO, Lingzhi, Shenzhen, Guangdong 518129 (CN); SHI, Youzhu, Shenzhen, Guangdong 518129 (CN)
(74) Representative: Hengelhaupt, Jürgen
(86) International application number: PCT/CN2007/070205
(87) International publication number: WO 2008/034354

(57) **Abstract**

A system, apparatus and method for transmitting digital subscriber signaling are disclosed. The said method is applied to a packet core network that uses SIP as call control signaling. The said system includes a SIP subscriber adaption node which is used for providing the SIP signaling adaption function with which the ISDN terminal is accessed to the packet network using SIP as core network control signaling, and a ISDN service emulation control unit which is used for providing the ISDN service control function. The said method comprises the following steps: transmitting the SIP message encapsulating the digital subscriber signaling information between the ISDN service emulation control unit and the SIP subscriber adaption node, then realizing the information intercourse about the ISDN emulation and implementing the ISDN emulation service. In this manner, inheriting the ISDN service in the packet network is achieved.

## Description

This application claims the priority of Chinese patent application No. 200610110574.X filed on August 07, 2006, titled "SYSTEM, METHOD AND APPARATUS FOR TRANSFERRING DIGITAL SUBSCRIBER SIGNALING", which is incorporated herein by reference in its entirety.

### Field of the Invention

The present invention relates to network communication technologies, and in particular to a system, a method and an apparatus for transferring digital subscriber signaling.

### Background of the Invention

An Integrate Service Digital Network (ISDN) provides end-to-end digital connection based on the provision of digitalized telephone network, so as to support a series of extensive services, including voice services and non-voice services, and provide a set of finite and standard subscriber-network interfaces. In the position where a subscriber accesses a switching system, 2B+D, 30B+D and nB+D standard interfaces are supported. The B channel is a bearer channel with a rate of 64kbit/s, and the D channel is signaling path with a rate of 16kbit/s or 64kbit/s. The ISDN network supports various integrated services including voice, data, literal and image services, and also supports various supplementary services (SS) such as call forwarding, Advice of Charge (AOC) and Completion of Calls to Busy Subscribers (CCBS). To implement these services, a large volume of messages need to be exchanged between an ISDN Terminal Equipment (ISDN TE) and the network, and such messages and the message exchange process are defined as Digital Subscriber Signaling No. 1 (DSS1). The DSS1 signaling is divided into layer 2 signaling and layer 3 signaling, wherein layer 2 signaling employs Link Access Procedure on the D-channel (LAPD), by which a layer 3 message may be transmitted reliably between the ISDN terminal and the network; while layer 3 signaling is control signaling of various basic and supplementary services provided to an ISDN subscriber.

A Public Land Mobile Network (PLMN) is an access mobile terminal oriented network, and is usually comprised of a radio access network and a mobile switching center, wherein a subscriber accesses the mobile switching center via the radio access network. Well-known mobile networks include Global System for Mobile Communication (GSM), Wideband Code Division Multiple Access (WCDMA) and Code Division Multiple Access (CDMA), etc.

Similar to the case in an ISDN network, basic and supplementary services such as voice services, call holding services that are also provided in a PLMN network. To provide these services, similar exchange of service control information is performed between the mobile terminal and the mobile switching center. Such information is defined as Connection Management (CM) Layer Protocol.

Because the subscriber employs radio access, the information cannot directly reach the mobile switching center, and must be transferred in CM application layer protocol between the mobile terminal and the mobile switching center by a radio access network, such as a Base Station Subsystem (BSS) or a Radio Network Subsystem (RNS). For example, in a GSM system, such information in CM layer protocol is transferred via Direct Transfer Application Part (DTAP) protocol in the A Interface Base Station Subsystem Application Part (BSSAP); in a Universal Mobile Telecommunications System (UMTS), such information is transferred in direct transfer mode of Radio Access Network Application Part (RANAP) of the Iu interface.

According to different service functions provided, the CM application layer protocol may be further divided into Call Control (CC) protocol, Supplementary Service (SS) protocol and Short Message Service (SMS) control protocol, etc. Wherein, the CC and SS application protocols are based on DSS1 layer 3 messages in respect of message format and message content, and only few information elements are extended. Except for the characteristic services provided by the radio network, the processes of other services provided by the radio network and services carried out using CC and SS application layer are basically consistent with ISDN. Via CC protocol and SS protocol, the network may perform control processes of various basic and supplementary services for a PLMN subscriber.

At present, with the development of packet technologies, traditional telecommunication network based on circuit switch is developing toward wideband telecommunication network based on packet switch, and many carriers are ready to or have already set up packet telecommunication networks. Although it is a trend for the future that subscribers uses packet communication terminals to access a packet telecommunication network, carriers cannot expect all the subscribers to change their TEs uniformly during the construction process of the packet telecommunication network. Therefore, at least the current packet telecommunication network must support the access of the traditional ISDN terminal. Thus, the packet telecommunication network must inherit the traditional ISDN/PSTN (Public Switched Telephone Network) services. In the research of each related standard organization, such services are commonly referred to as ISDN/PSTN Emulation Service. At present, the emulation service research is only limited to the aspect of how to inherit PSTN service in a packet network; for the inheritance of ISDN services, there is no essential development or specific solution.

It is one of the technical development trends to use Session Initiation Protocol (SIP) as call control signaling of packet telecommunication core network. For example, International Telecommunication Union-Telecommunication Standardization Sector (ITU-T) and European Telecommunications Standards Institute (ETSI) have worked out standards for the Next Generation Network (NGN). Therefore, when an ISDN terminal accesses a packet core network using SIP as call control signaling, how the SIP transmits related information carried by digital subscriber signaling needs to be considered in order to implement ISDN emulation services and to keep the original service experience of a subscriber constant. But in the prior art, no method for integrally transmitting digital subscriber signaling information so as to realize ISDN emulation service is proposed. Therefore, ISDN emulation services cannot be realized.

DSS1 signaling includes link layer signaling and network layer signaling. If not specifically noted, DSS1 signaling mentioned hereafter refers to network layer signaling, i.e., Layer 3 (L3) signaling. In a radio network, an L3 layer usually includes Radio Resources (RR), Mobility Management (MM) and Connection Management (CM). If not specifically noted, radio network L3 signaling mentioned below refers to CM part of radio network L3. DSS1 signaling is control signaling issued by ITU-T that is applicable to ISDN subscriber-network interfaces, similar protocol also exists in organizations such as ETSI, and for details, reference may be made to the standards issued by standard organizations such as ITU-T and ETSI. The Radio network L3 is defined in 3GPP standards such as 3GPP TS 24.007. Equal protocol also exists in organizations such as 3GPP2, and for details, reference may be made to the standards issued by 3GPP2-related organizations.

In existing standard files, there is provided a method for transmitting call information in a DSS1 message using message and parameter mapping approach when DSS1 and SIP communicate with each other. The method also provides the mapping of information elements in a DSS1 message such as calling number, called number, High Layer Compatibility (HLC) and Bearer Capability (BC) to parameters in an SIP message such as FROM, TO and SDP. By transmitting some DSS1 signaling information via such mapping, a basic call may be accomplished.

However, as limited by the existing SIP messages and header domain, only finite DSS1 signaling information can be transmitted by using the existing mapping method. Because there are many kings of ISDN services, various signaling information elements and parameters need to be used when these services are implemented. For example, in an ISDN supplementary service, the number of operation definitions for interaction between a subscriber and the network using FACILITY messages is up to 95, and most of the operations cannot be mapped in SIP. Therefore, the requirement of supporting ISDN emulation service cannot be met by purely using SIP mapping mode. If all of these parameters are to be mapped, great extension needs to be made on SIP protocol, which will have great influence on SIP protocol itself. Moreover, the extension only supports ISDN subscriber signaling, but is not universal.

Therefore, since the current DSS1 signaling information cannot be fully mapped in an SIP message, service information may be lost. For the service inheritance, smooth ISDN emulation service cannot be achieved, that is, the prior art only supports basic call and few ISDN supplementary service such as calling number display when an ISDN terminal accesses a packet core network using SIP as call control signaling, but does not support all ISDN supplementary services.

### Summary of the Invention

Embodiments of the present invention provide a system and a method for transferring digital subscriber signaling, which are used for transferring digital subscriber signaling information using SIP when an ISDN terminal accesses a packet core network using SIP as call control signaling, thereby implementing ISDN emulation services.

Embodiments of the present invention further provide an apparatus for transferring digital subscriber signaling, thereby implementing ISDN emulation services.

The technical solutions of the embodiments of the present invention include:

A system for transferring digital subscriber signaling, comprising at least one ISDN terminal and a packet core network, wherein the packet core network includes at least an ISDN service emulation control unit, and an SIP subscriber adaptation node is set between the ISDN terminal and the packet core network, and the ISDN terminal is in connection with the ISDN service emulation control unit via the SIP subscriber adaptation node; the ISDN service emulation control unit is adapted to provide an ISDN service control function and a network resource control function; the SIP subscriber adaptation node provides signaling adaptation between digital subscriber signaling protocol and SIP by message mapping and/or encapsulating a digital subscriber signaling message into a message body of the SIP.

A method for transferring digital subscriber signaling, which is applicable in a packet core network that uses an SIP as call control signaling, the method includes: a first interface adapted to perform a first SIP message exchange with the packet core network; a second interface adapted to connect an ISDN TE and perform a first digital subscriber signaling message exchange with the ISDN TE; and a message receiving unit adapted to receive the first SIP message transferred by the first interface and the first digital subscriber signaling message transferred by the second interface.

An apparatus for transferring digital subscriber signaling, which is applicable in a packet core network that uses SIP as call control signaling. The apparatus includes: a first interface adapted to perform a first SIP message exchange with the packet core network; a second interface adapted to connect an ISDN TE and perform a first digital subscriber signaling message exchange with the ISDN TE; a message receiving unit adapted to receive the first SIP message transferred by the first interface and the first digital subscriber signaling message transferred by the second interface; a message processing unit, in connection with the message receiving unit, for encapsulating or mapping the first digital subscriber signaling message content from the message receiving unit into a second SIP message, or generating a second digital subscriber signaling message from the received first SIP message; a message sending unit, in connection with the message processing unit, for sending the second SIP message or the second digital subscriber signaling message from the message processing unit to the first interface and the second interface.

With the system, method and apparatus for transferring digital subscriber signaling according to the embodiments of the present invention, when an ISDN accesses a packet core network that uses SIP as call control signaling, digital subscriber signaling protocol information may be integrally transferred between an ISDN terminal and an ISDN service emulation control unit by carrying a digital subscriber signaling message/information elements in the SIP message body. Therefore, ISDN emulation service may be implemented easily, and ISDN service may be inherited in a packet network.

### Brief Description of the Drawings

Figure 1 is a schematic diagram showing a network logical structure of the system according to an embodiment of the present invention;

Figure 2 is a flow chart for implementing UUS1 and HOLD in the ISDN emulation service according to a method of the present invention;

Figure 3 is a flow chart of the process for starting a conference in idle state in a method according to an embodiment of the present invention;

Figure 4 is a flow chart of the operation of adding one party in a conference in a method according to an embodiment of the present invention; and

Figure 5 is a flow chart of the process for implementing UUS service of a WCDMA subscriber in a method according to an embodiment of the present invention.

### Detailed Description of the Embodiments

Embodiments of the present invention are illustrated below in detail in conjunction with the drawings.

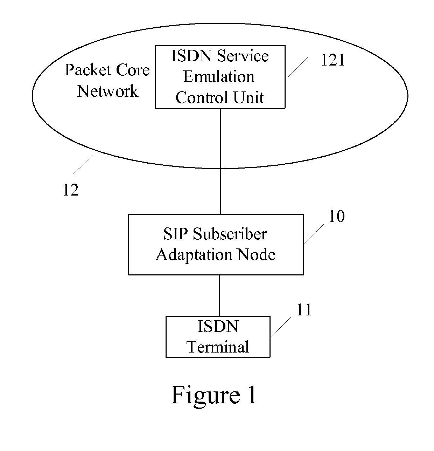

An embodiment of the present invention provides a system for transferring digital subscriber signaling. The network logical structure of a packet core network employing SIP as call control signaling is shown in Figure 1, wherein an SIP subscriber adaptation node 10 is set between an ISDN terminal 11 and a packet core network 12, the ISDN terminal 11 is in connection with an ISDN service emulation control unit 121 in the packet core network 12 via the SIP subscriber adaptation node 10, and the ISDN service emulation control unit 121 performs service control and network resource control of the ISDN, including basic services and supplementary services. The SIP subscriber adaptation node provides signaling adaptation between digital subscriber signaling protocol and SIP by message mapping and/or encapsulating a digital subscriber signaling message into the message body of SIP.

The ISDN service emulation control unit 121 provides logic control function on ISDN service emulation to an ISDN terminal subscriber that accesses the packet core network 12. The SIP subscriber adaptation node 10 is signaling processing entity for the ISDN terminal 11 to access a packet domain that employs SIP as call control signaling, and has SIP User Adaptation (SIP UA) function and can screen access layer subscriber signaling. As a protocol converting node, the SIP subscriber adaptation node 10 provides a function of translating between DSS1 protocol, CC protocol, and SIP.

It should be noted that Figure 1 is a logic connection diagram. In a practical physical link, other entities may exist between the ISDN terminal 11 and the SIP subscriber adaptation node 10.

The ISDN service emulation control unit 121 provides various service logic control functions such as CC and routing connection to a registered subscriber that accesses the packet core network 12, and provides a service control unit for logic control on ISDN emulation services to an ISDN terminal subscriber.

As can be seen from Figure 1 that, to implement an ISDN emulation service, digital subscriber signaling information between the original ISDN subscriber network interfaces must be transmitted via an SIP message between the ISDN service emulation control unit 121 and the SIP subscriber adaptation node 10 of the ISDN terminal 11. The signaling information may be an integral DSS1 layer 3 signaling message, such as an SETUP message, a HOLD message, a FACILITY message, or a radio interface signaling CM layer message. Furthermore, because the prior art supports mapping of information elements such as calling and called numbers in a DSS1 signaling message to SIP message parameters, it is possible to not transmit the integral DSS1 signaling message, but only information elements thereof related to the current service, such as User-to-User Signaling (UUS) information elements, FACILITY information elements and DISPLAY information elements.

In the method for transferring digital subscriber signaling according to embodiments of the present invention, ISDN service information exchange is performed between the ISDN service emulation control unit 121 and the SIP subscriber adaptation node 10 using an SIP message encapsulated with digital subscriber signaling information, and the ISDN service emulation control unit 121 performs service control using the ISDN service information thereby implementing ISDN service emulation. The SIP subscriber adaptation node 10 is adapted to provide an SIP signaling adaptation function for accessing an ISDN terminal to a packet network that employs SIP as core network call control signaling, the ISDN service emulation control unit 121 is adapted to provide an ISDN service control function.

The specific process of a method according to an embodiment of the present invention is illustrated below by taking a DSS1 message as an example.

Firstly, a message receiving unit of the SIP subscriber adaptation node of a served subscriber receives a DSS1 or CC layer protocol message from a subscriber terminal. A message processing unit of the SIP subscriber adaptation node analyzes the content of the received digital subscriber signaling and selects a suitable SIP message to map the content contained in the digital subscriber signaling to the SIP header domain or a parameter. The digital subscriber signaling message or the information elements in the digital subscriber signaling information in the message body of the SIP message are encapsulated according to the local policy or configuration policy, and then sent to an ISDN service emulation control unit via a message sending unit.

To encapsulate the DSS1 signaling information in the SIP message body, a new Media Type for the SIP message body is to be defined, the definition format is as follows:

a) Media Type for transferring a DSS1 layer 3 message:
Media type name: application
Media subtype name: DSS1-Message
Required parameters: Version
Optional parameters: charset
Encoding scheme: codeset

Media Type for transferring a DSS1 layer 3 information elements:
Media type name: application
Media subtype name: DSS1-IE
Required parameters: Version
Optional parameters: charset
Encoding scheme: codeset

Wherein, the parameter "version" represents DSS1 messages issued by different organizations such as ITU-T, ETSI and ANSI; the parameter "charset" represents definition string set, which is applicable to message encapsulation in us-ascii mode, for example, unicode.

The Parameter "codeset" represents the coding type for encapsulating a DSS1 message, and encapsulating a DSS1 message or an information element may be performed in binary mode or in us-ascii mode, which is determined by a coding/decoding indication field in the media type description. When encapsulation is performed in the binary mode, a binary DSS1 message or information elements is encapsulated in the SIP message body; when encapsulation is performed in the us-ascii mode, the encapsulating entity needs to parse the binary DSS1 message or the information element, convert it into us-ascii mode and then encapsulate it in the message body.

Apparently, media types of up to four different encapsulation modes may be defined: binary coding DSS1 message encapsulation, us-ascii coding DSS1 message encapsulation, binary coding DSS1 information elements encapsulation, and us-ascii coding DSS1 information elements encapsulation. In practical application, the media type of one encapsulation mode thereof may be selected as required. The encapsulation in embodiments of the present invention is implemented by adding a new media type of the SIP message body or extending the existing media type.

A method according to an embodiment of the present invention may employ at least one encapsulation mode. When a method according to an embodiment of the present invention employs more than one encapsulation modes, the encapsulation modes may be distinguished by setting different media types or setting different parameters for one media type. In practical application, if the system requires to support more than one encapsulation modes, in addition to defining the media types of the above encapsulation modes, different parameters may be defined to distinguish between binary coding encapsulation/us-ascii coding encapsulation and/or DSS1 message encapsulation/DSS1 information elements encapsulation. One or more media types may be defined in any combination as required, wherein different encapsulation modes are distinguished via parameters.

Next, upon receiving the SIP message, the ISDN service emulation control unit of the served subscriber performs service processing on the SIP message, and sends the SIP message encapsulated with digital subscriber signaling information to the SIP subscriber adaptation node of the served subscriber or the remote network. Upon receiving the SIP message from the SIP subscriber adaptation node, the ISDN service emulation control unit analyzes the SIP and the SIP message body content, performs corresponding ISDN service control processing, and sends the SIP message carrying DSS1-related information to the SIP subscriber adaptation node of the served subscriber or a remote subscriber, or to a remote network, i.e., an ISDN emulation service control unit of the remote subscriber.

Then, upon receiving the SIP message from the ISDN service emulation control unit, the SIP subscriber adaptation node of the served subscriber or the remote subscriber translates the SIP message into a digital subscriber signaling message and sends the digital subscriber signaling message to the corresponding ISDN terminal. The message receiving unit of the SIP subscriber adaptation node receives the SIP message from the ISDN emulation service control unit, and the message processing unit of the SIP subscriber adaptation node parses the received SIP message. If a digital subscriber signaling message is encapsulated in the SIP message body, the digital subscriber signaling message in the SIP message body is extracted and sent to the subscriber terminal. If a digital subscriber signaling information elements is encapsulated in the SIP message body, suitable digital subscriber signaling message is selected according to the SIP message type, and the SIP header domain and parameters are mapped to information elements in the digital subscriber signaling message, and the digital subscriber signaling information elements in the SIP message body is added to the digital subscriber signaling message, and then the digital subscriber signaling message is sent to the subscriber terminal via the message sending unit.

According to the above description of a method provided in embodiments of the present invention, the DSS1 signaling exchange between the ISDN terminal and the ISDN service emulation control unit may be implemented, and various original ISDN services may be implemented. In the above processes of the embodiments of the present invention, the SIP subscriber adaptation node may encapsulate the digital subscriber signaling message in the SIP message body, or encapsulate one or more digital subscriber signaling information elements in the SIP message body.

Embodiments of the present invention further provide an apparatus for transferring digital subscriber signaling, which is applicable in a packet core network that employs SIP as call control signaling. The apparatus includes: a first interface adapted to connect the packet core network; a second interface adapted to connect an ISDN TE signaling path; a message receiving unit adapted to receive a first SIP message transferred by the first interface and a first digital subscriber signaling message transferred by the second interface; a message processing unit, in connection with the message receiving unit, adapted to encapsulate or map the first digital subscriber signaling message content from the message receiving unit into a second SIP message, or generate a second digital subscriber signaling message from the received first SIP message; a message sending unit, in connection with the message processing unit, adapted to send the second SIP message or the second digital subscriber signaling message from the message processing unit to the first interface and the second interface.

In the apparatus according to embodiments of the present invention, the first interface is an SIP message interface for encapsulating digital subscriber signaling information, and the second interface is a digital subscriber signaling message interface. The digital subscriber signaling information of the first interface refers to a binary digital subscriber message or information elements, or a digital subscriber signaling message or information elements described in us-ascii mode. The digital subscriber signaling message interface is a network layer message interface for transferring DSS1 or a CM layer message interface for transferring radio interface signaling.

Two relatively universal examples are given below to describe how to carry DSS1 information via an SIP message to provide ISDN emulation services to an ISDN terminal subscriber that accesses a packet core network using SIP as call control signaling.

It should be noted that the flow chart and literal illustration in embodiments of the present invention are only to highlight the explanation of the key technology of embodiments of the present invention, and by no way to represent an integral call and service control process or exhaust all the possible branch processes. The digital subscriber signaling is a DSS1 network layer signaling, which is also applicable to the radio interface CM layer.

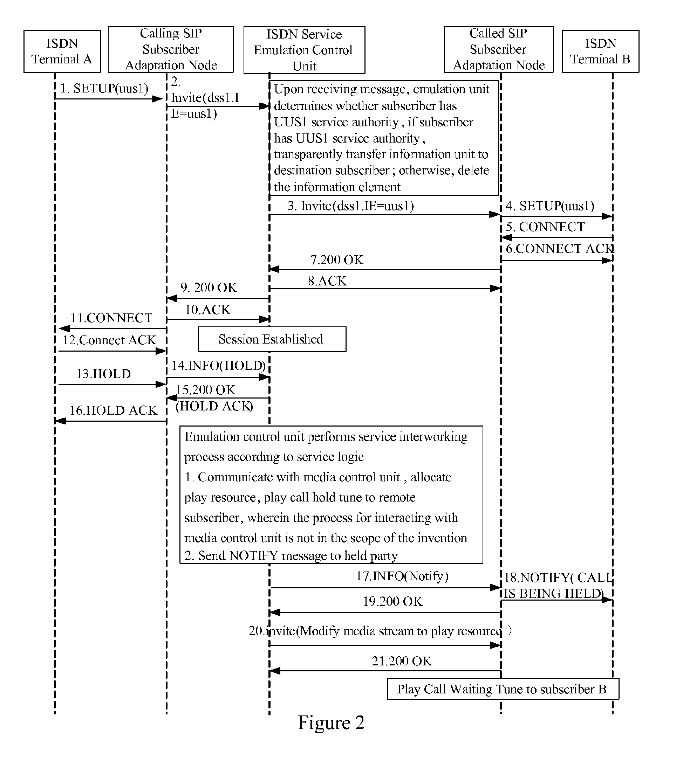

As shown in Figure 2, the process for implementing a method according to embodiments of the present invention is illustrated by taking the implementation of ISDN SS User to User Signaling 1 (UUS1) and HOLD as an example, and the process is as follows:

1. An ISDN subscriber terminal A sends a DSS1 SETUP message to an SIP subscriber adaptation node. The calling number in the SETUP message is 8880006 and the called number is 8880008, the Bearer Capability (BC) is SPEECH, and UUS1 information is carried. The DSS1 layer 3 message content of the ISDN signaling path received by the subscriber adaptation node is as follows, wherein the data information of the UUS information elements of the DSS1 signaling added to the information body is underlined:
08 01 01 05 04 03 80 90 a3 18 01 83 6c 09 41 a0 38 38 38 30 30 30 36 70 08 80 38 38 38 30 30 30 38 **7E 0A 04 38 38 38 38 38 38 38 38 38 38**

2. The SIP subscriber adaptation node translates the DSS1 SETUP message into a SIP INVITE message according to the mapping mode of the prior art, and adds the following information to the message body:
Content-type: application/DSS1-IE; version= ITU-T; Encoding scheme = binary **7E 0A 04 38 3**8 **38 38 38 38 38 38 38 38**

The above message body content is a binary representation of the DSS1 UUS information elements.

Of course, the above content is also parsed into us-ascii mode description for encapsulation. For the DSS1 information elements containing content of "7E 0A 04 38 38 38 38 38 38 38 38 38 38", according to the definition of the DSS1 information elements structure, the binary stream 7E identifies the UUS information elements, 0A identifies the information elements length, 04 identifies the protocol discriminator, and the rest of the content is UUS data information. By parsing in this way, the above content may be converted into information in us-ascii mode as follows:
Content-type: application/DSS1-IE; version= ITU-T; Encoding scheme = us-ascii UUS,pd=0f,dat=38 38 38 38 38 38 38 38 38 38

Wherein, UUS identifies the name of the information elements, pd is the protocol discriminator, and dat is the UUS data information.

The above underlined part is the UUS information elements of DSS1 signaling added to the information body.

The message is shown as follows:
INVITE sip:8880008@ag2.example.com SIP/2.0
   Via: SIP/2.0/UDP acess.example.com
   From: sip:8880006@agl.example.com
   To: sip:8880008@ag2.example.com
   Call-ID: 12345678908888888888@example.com
   CSeq: 1234 INVITE
   Contact: <sip:8880006@example.com>
   Content-Length: 385
   MIME-Version: 1.0
   Content-Type: application/SDP; charset=ISO-10646
   v=0
   o=audet 2890844526 2890842807 5 IN IP4 132.172.62.2
   s=SDP example
   c=IN IP4 access.example.com
   t= 2873397496 2873404696
   m=audio RTP/AVT 8
   a= -
   b= 64kbit/s
Content-type: application/DSS1-IE; version= ITU-T; Encoding scheme = binary **7E 0A 04 38 38 38 38 38 38 38 38 38 38**

3. The ISDN service emulation control unit receives the SIP message, analyzes the message and information in the message body, and determines whether the subscriber has UUS1 service authority according to the registration data of the subscriber. Because the UUS information elements is end-to-end transferred information, this message is transparently transferred to the SIP subscriber adaptation node to which the called subscriber (i.e., remote subscriber B of served subscriber A) pertains. If the subscriber has no service authority, the ISDN service emulation control unit will delete the above UUS information encapsulated in the message body.

4. The destination SIP subscriber adaptation node analyzes the message content, translates the SIP INVITE message into a DSS1 SETUP message, identifies the destination SIP subscriber adaptation node of the SIP message body content, analyzes the message content, and maps the INVITE message to a DSS1 SETUP message according to the existing method, identifies the DSS1 information elements carried in the SIP message body, and extracts and adds the DSS1 information elements to the SETUP message, and sends the SETUP message to ISDN terminal B, thereby implementing UUS 1 service.

5. The ISDN terminal B sends a DSS1 CONNECT message to connect the call.

6. The called SIP subscriber adaptation node responds with a DSS1 CONNECT ACKNOWLEDGE message.

7. The called SIP subscriber adaptation node translates the DSS1 CONNECT message into SIP 200 OK and sends the SIP 200 OK to the ISDN service emulation control unit.

8. The ISDN service emulation control unit sends an SIP ACK to respond to the SIP 200 OK message.

9. The ISDN service emulation control unit sends the SIP 200 OK to the calling SIP subscriber adaptation node to indicate setup of the session.

10. The calling SIP subscriber adaptation node uses an SIP ACK message to acknowledge.

11. The calling SIP subscriber adaptation node translates the SIP 200 OK into a DSS1 CONNECT message, and sends the DSS1 CONNECT message to the ISDN terminal A via a subscriber access processing node.

12. ISDN terminal A responds with a DSS1 CONNECT ACKNOWLEDGE message according to the DSS1 signaling process. At this point, the session is set up.

The process in which the ISDN terminal A sends a DSS1 HOLD message requesting to hold a call service in the method according to embodiments of the present invention is illustrated below. The DSS1 message content is as follows:

### 08 01 01 24

13. The ISDN terminal A sends a DSS1 HOLD message to the calling SIP subscriber adaptation node, requesting to hold a call service.

14. Because no corresponding mapping mode is available in the prior art, the SIP subscriber adaptation node uses an SIP INFO message to encapsulate the DSS1 HOLD message, sends the DSS1 HOLD message to the corresponding ISDN service emulation control unit. The content added to the INFO message body is as follows, which is an integral DSS1 HOLD message:
Content-type: application/DSS1-Message; version= ITU-T; Encoding scheme = binary
**08 01 01 24**

15. The ISDN service emulation control unit analyzes the SIP message and the message body content, determines that it is a calling request ISDN HOLD service, and determines that it is a calling request HOLD service according to the normal service bearer DSS1 information of ISDN HOLD service, and then returns a HOLD ACKNOWLEDGE message according to the normal process of ISDN HOLD services. The HOLD ACKNOWLEDGE message is encapsulated in the message body of the SIP 200 OK message, and the following content is added into the message body:
Content-type: application/ DSS1-Message; version= ITU-T; Encoding scheme = binary
**08 01 81 28**

16. The calling SIP subscriber adaptation node transparently transfers the DSS1 HOLD ACKNOWLEDGE message in the message body to the ISDN terminal A according to the content in the SIP 200 OK message body, wherein the content is as follows:
**08 01 81 28**

17. The ISDN service emulation control unit sends an SIP INFO message carrying a DSS1 Notify message to the called SIP subscriber adaptation node according to the requirement of HOLD service, so as to indicate to the called subscribed that the call is held; the content added into the INFO message is as follows:
Content-type: application/ DSS1-Message; version= ITU-T; Encoding scheme = binary
**08 01 01 6E 27 01 79**

When the information is described in us-ascii mode, the message body content is as follows:

The above "6E" is a description of the DSS1 NOTIFY message, "27" is a description of the DSS1 NOTIFY information elements, "01" is the message length, "79" is the NOTIFY description language, which represents remote call hold. Upon message parse, the SIP message body content is determined as follows:
Content-type: application/ DSS1-Message; version= ITU-T; Encoding scheme = us-ascii
NOTIFY
NI, nd = 79

Wherein, NOTIFY identifies the message name, NI identifies the information elements notify indicator, nd represents that notify description parameter in the information elements is 79 (remote hold).

18. Upon receiving the SIP message, the called SIP subscriber adaptation node extracts the information encapsulated in the SIP message body, constructs a DSS1 NOTIFY message (which indicates that the call is held) and sends the DSS1 NOTIFY message to the ISDN terminal B. The message content is as follows:
**08 01 01 6E 27 01 79**

19. The called SIP subscriber adaptation node uses a 200 OK message to acknowledge according to the protocol requirement.

20. The ISDN service emulation information elements control to play operation to the served subscriber. This is achieved by sending an SIP INVITE message carrying SDP description media resource address to the called SIP subscriber adaptation node.

21. The called SIP subscriber adaptation responds to the INVITE message with a node 200 OK message as SIP requires, and redirects the voice path stream of the ISDN terminal B to the media resource, so that the called subscriber hears a call hold tune. At this point, the call is held and the HOLD service is accomplished.

It may be seen from the above method according to embodiments of the present invention, UUS1 HOLD service and service interworking of ISDN is achieved by carrying the DSS1 signaling information in SIP. Message exchange may be performed after mapped in the existing mapping mode, and messages without existing mapping modes are directly encapsulated into different message bodies for transferring.

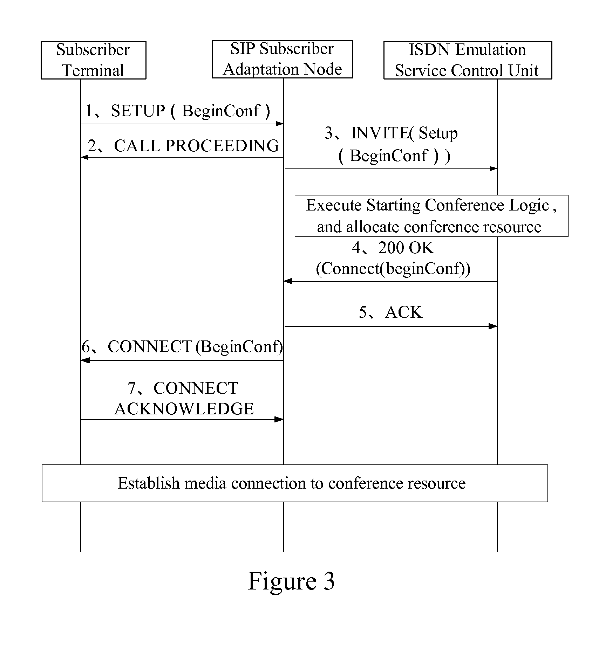

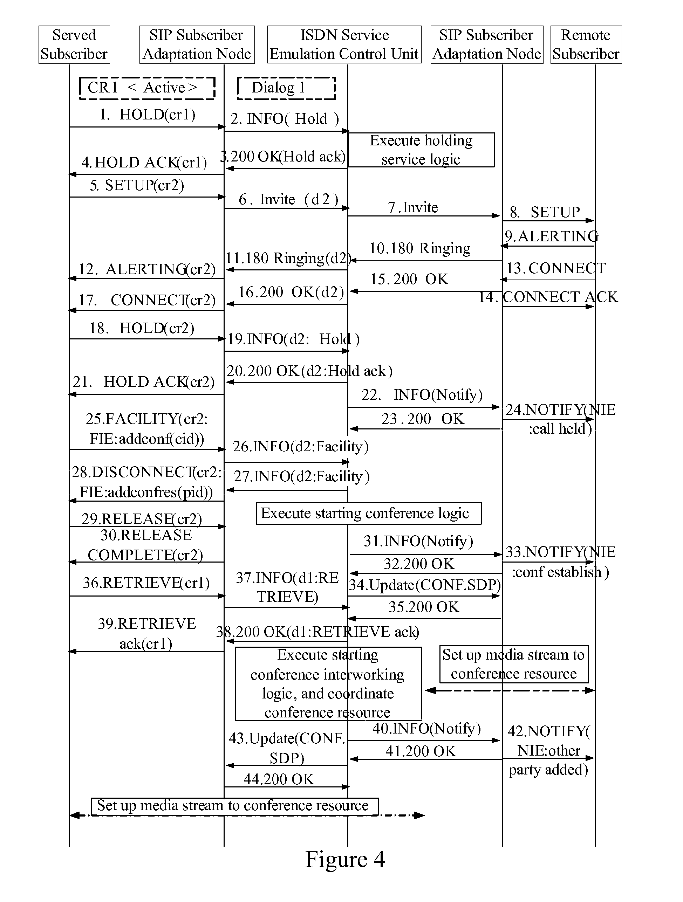

The following is a description of a process for implementing conference telephone service in an existing ISDN network using a service in a packet core network that uses SIP as call control signaling in the method according to embodiments of the present invention. Figure 3 and Figure 4 describe the implementation of a method according to embodiments of the present invention in the packet core network using SIP as call control signaling.

As shown in Figure 3, a process for an ISDN terminal to start a conference in idle state employing a method according to embodiments of the present invention in a packet core network using SIP as call control signaling includes:

1. A served subscriber, i.e., a calling ISDN terminal, sends a DSS1 SETUP message carrying conference starting components according to Q.954.1 (1.5.2.1 requirement) to request starting a conference in idle state. The message content is as follows:
08 01 01 05 04 03 80 90 a3 18 01 83 **1c 0c 91 a1 09 02 01 68 02 01 28 02 01 03** 6c 0941 a0 38 38 38 30 30 30 36

2. The SIP subscriber adaptation node responds with a DSS1 CALL PROCEEDING message.

3. The SIP subscriber adaptation node analyzes the DSS1 message content, encapsulates the DSS1 SETUP message in an SIP INVITE message and sends the SIP INVITE message to an ISDN service emulation control unit. The message is as follows:
INVITE sip:CONF@agl.example.com SIP/2.0
   Via: SIP/2.0/UDP acess.example.com
   From: sip:8880006@agl.example.com
   To: sip:CONF@agl.example.com
   Call-ID: conf12345678908888888888@example.com
   CSeq: 1234 INVITE
   Contact: <sip:8880006@example.com>
   Content-Length: 462
   MIME-Version: 1.0
   Content-Type: application/SDP; charset=ISO-10646
   v=0
   o=audit 2890844526 2890842807 5 IN IP4 132.172.62.2
   s=SDP example
   c=IN IP4 access.example.com
   t= 2873397496 2873404696
   m=audio RTP/AVT 8
   a= -
   b= 64kbit/s
Content-type: application/DSS1-Message version= ITU-T; Encoding scheme = binary
   08 01 01 05 04 03 80 90 a3 18 01 83 **1c 0c 91 a1 09 02 01 68 02**
   **01 28 02 01 03** 6c 09 41 a0 38 38 38 30 30 30 36

4. The ISDN service emulation control unit carries a DSS1 CONNECT message carrying a returned result component of "Begin Conference" in an SIP 200 OK message according to "Begin Conference" service logic, and adds the following content to the SIP 200 OK message:
Content-type: application/DSS1-Message version= ITU-T; Encoding scheme = binary
0801 81 07 1c 10 91 a2 0c 02 0160 30 08 02 0128 30 03 02 01 01

5. The SIP subscriber adaptation node uses SIP ACK to acknowledge.

6. The SIP subscriber adaptation node transparently transfers the DSS1 CONNECT message in the message body to the calling ISDN terminal according to the content in the SIP 200 OK message body, wherein the content is as follows:
0801 81 07 1c 10 91 a2 0c 02 01 60 30 08 02 01 28 30 03 02 01 01

7. The calling ISDN terminal responds with a DSS1 CONNECT ACK message.

The process for adding one party in a conference in a method according to embodiments of the present invention is shown in Figure 4. The served subscriber and the remote subscriber in Figure 4 are both ISDN terminals. The process includes:

1. An ISDN terminal (served subscriber) sends a DSS1 HOLD message, in which the Call Reference (CR) is a CR for beginning a conference.

2. An SIP subscriber adaptation node carries the HOLD message of DSS1 signaling in an SIP INFO message, the SIP INFO message uses a dialogue number for starting-conference operation, and the following content is added into the SIPINFO message body:
Content-type: application/DSS1-Message; version= ITU-T; Encoding scheme = binary
08 01 01 24

3. An ISDN service emulation control unit parses the content of the SIP INFO message body, determines that it is ISDN HOLD service, exchanges resources with the media control resource, modifies the served subscriber media stream as unidirectional (if a bidirectional connection from the served subscriber to the media stream of the media resource is set up when the conference is started). Further, a HOLD ACK message of DSS1 signaling is encapsulated in the SIP 200 OK message. The following content is added into the SIP 200 OK message body:
Content-type: application/ DSS1-Message; version= ITU-T; Encoding scheme = binary
08 01 81 28

4. The SIP subscriber adaptation node parses the content encapsulated in the SIP 200 OK message into a DSS1 message, and extracts the DSS1 HOLD ACK message from the message body and sends the DSS1 HOLD ACK message to the ISDN terminal.

In processes 5-17, a new session between the served subscriber and a remote subscriber is set up according to the existing interworking process, which will not be described in detail here.

18. The ISDN terminal (served subscriber) sends a DSS1 HOLD message. The CR of the DSS1 HOLD message is a CR used for calling the remote subscriber.

19. The SIP subscriber adaptation node carries the HOLD message in the DSS1 signaling in an SIP INFO message, and the following content is added into the SIP INFO message body:
Content-type: application/DSS1-Message; version= ITU-T; Encoding scheme = binary
08 01 02 24

20. The ISDN service emulation control unit parses the SIP INFO message body content into an ISDN HOLD service request, responds with a DSS1 HOLD ACK message according to the requirement of the service process. The DSS1 HOLD ACK message is encapsulated in the SIP INFO message content. The ISDN service emulation control unit responds with a HOLD ACK message according to the requirement of HOLD service. The HOLD ACK message is encapsulated in a 200 OK message and sent to the SIP subscriber adaptation node. The following content is added into the message body:
Content-type: application/ DSS1-Message; version= ITU-T; Encoding scheme = binary
08 01 82 28

21. The SIP subscriber adaptation node determines that what is encapsulated in the SIP 200 OK message is a DSS1 message, and extracts the message body content and sends the content to the ISDN terminal.

22. The ISDN service emulation control unit processes the HOLD service interworking logic and sends an SIP INFO message carrying a DSS1 Notify message to a remote SIP subscriber adaptation node.

23. The remote SIP subscriber adaptation node responds with an SIP 200 OK message.

24. The remote SIP subscriber adaptation node extracts the DSS1 Notify message in the SIP INFO message body to send to the remote subscriber.

25. The served subscriber sends a DSS1 FACILITY message and applies for "Add One Party To The Conference" operation. The DSS1 message content is as follows:
08 01 02 1c 91 a1 09 02 01 68 07 01 29 02 01 01

26. The SIP subscriber adaptation node encapsulates the DSS1 message in the SIP INFO message and sends the SIP INFO message to an ISDN service emulation control node. The following content is added to the INFO message:
Content-type: application/DSS1-Message; version= ITU-T; Encoding scheme = binary
08 01 02 1c 91 a1 09 02 01 68 07 01 29 02 01 01

27. The ISDN service emulation node returns a DSS1 DISCONNECT message according to the requirement of the conference telephone service process. The DISCONNECT message carries a returned result component of Add One Party. This message is encapsulated in an SIP 200 OK message and sent. The following content is added to the message:
Content-type: application/DSS1-Message; version= ITU-T; Encoding scheme = binary
08 01 82 08 03 12 9e ff

28. The SIP subscriber adaptation node extracts the DISCONNECT message from the SIP 200 OK message body and sends the DISCONNECT message to the served subscriber. The message content is as follows:
08 01 82 08 03 12 9e ff

29. The served subscriber sends a DSS1 RELEASE message and releases the partial call cr2.

30. The SIP subscriber adaptation node responds with a DSS1 RELEASE COMPLETE message.

31. The ISDN service emulation control unit processes "Add One Party To The Conference Telephone" operation service logic and sends an SIP INFO message carrying a DSS1 Notify message to a remote SIP subscriber adaptation node to indicate that a conference is set up. The content added to the INFO message is as follows:
Content-type: application/DSS1-Message; version= ITU-T; Encoding scheme = binary
08 01 01 6E 27 01 42

32. The SIP subscriber adaptation node uses an SIP 200 OK message to acknowledge.

33. The SIP subscriber adaptation node extracts the DSS1 message from the SIP INFO message body and sends the DSS1 message to the remote subscriber.

34. The ISDN service emulation control unit sends a media stream for modifying the SIP Update message to the media resource, and the ISDN service emulation control unit interacts with the media resource control unit.

35. The remote SIP subscriber adaptation node uses the SIP 200 OK message to acknowledge.

36. The ISDN terminal (served subscriber) replies a DSS1 RETRIEVE message to hold the call. The CR in the DSS1 RETRIEVE message is similar to the CR used by the remote subscriber for calling, and the message content is as follows:
08 01 02 24

37. The SIP subscriber adaptation node encapsulates the DSS1 RETRIEVE message in the SIP INFO message, the INFO message encapsulates the RETRIEVE message in an INFO message used for the session with the newly added party of the conference, and the INFO message uses the dialogue number for the session with the remote subscriber. The following content is added to the message body:
Content-type: application/DSS1-Message; version= ITU-T; Encoding scheme = binary
08 01 02 31

38. The ISDN service emulation control unit parses the information carried in the SIP INFO message and responds with a DSS1 RETRIEVE ACK message according to the requirement of the call hold service. The DSS1 RETRIEVE ACK message is encapsulated in an SIP 200 OK message and sent to the SIP subscriber adaptation node. The following content is added into the SIP 200 OK message body:
Content-type: application/DSS1-Message; version= ITU-T; Encoding scheme = binary
08 01 8233

39. The SIP subscriber adaptation node determines that the DSS1 message is encapsulated in the SIP 200 OK message, extracts the message and sends it to the ISDN terminal.

40. The ISDN service emulation control unit analyzes the DSS1 RETRIEVE message, determines that the conference initiating party is to be retrieved to the conference call, and sends an SIP INFO message carrying a DSS1 Notify message to a remote SIP subscriber adaptation node according to the CONF service interworking logic to indicate that there are other parties joining the conference.

41. The remote SIP subscriber adaptation node uses an SIP 200 OK message to acknowledge.

42. The SIP subscriber adaptation node extracts the DSS1 message from the SIP INFO message body and sends a DSS1 NOTIFY message to the remote subscriber.

43. The ISDN service emulation control unit sends an SIP Update message to the SIP subscriber adaptation node and modifies the served subscriber media stream to the media resource.

44. The SIP subscriber adaptation node uses an SIP 200 OK message to acknowledge.

The joining of the subsequent conference attending parties may be accomplished by the same process, so it will not be described again here. In comparison with the prior art, the method according to the embodiments of the present invention may screen the perception of the subscriber on the network difference and realize integral interaction of service exchange, thereby realizing ISDN emulation service.

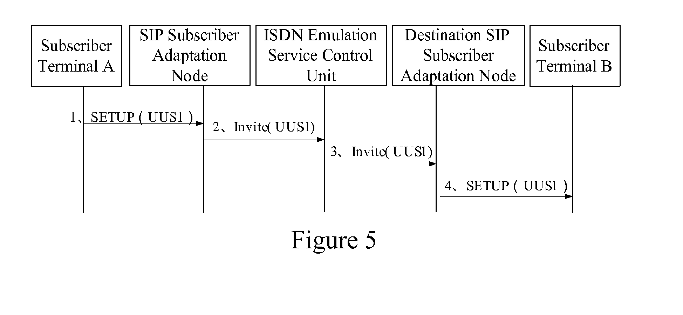

Figure 5 shows a process for realizing a Public Land Mobile Network (PLMN) service in the method according to the embodiments of the present invention by taking the realization of SS UUS1 (User to User Signaling 1) used by a Wideband Code Division Multiple Access (WCDMA) subscriber as an example. The WCDMA subscriber accesses an SIP subscriber adaptation node via a Radio Network Subsystem (RNS). Because the RNS transparently transfers CC layer messages, the process from the terminal to the SIP subscriber adaptation node via the RNS is omitted in Figure 5; instead, the message is directly sent to the SIP subscriber adaptation node from the subscriber terminal. The premise of this process is that the subscriber has accomplished the access process. The specific process will not be described again here. The process is explained as follows:

1. A subscriber terminal sends a CC layer SETUP message to an SIP subscriber adaptation node. In the SETUP message, the called number is 8880000, the BC is SPEECH, and UUS1 information is carried. The radio CC layer message content received by the subscriber adaptation node is as follows, wherein the data information of UUS information elements of DSS1 signaling added to the information body is underlined:
03 01 05 04 04 a0 5E 05 A1 88 88 00 08 **7**E **0A 04 38 38 38 38 38 38 38 38 38 38**

2. The SIP subscriber adaptation node translates the CC layer SETUP message into an SIP INVITE message according to the mapping mode of the prior art, and adds the following information to the message body:
Content-type: application/DSS1-IE; version= ITU-T; Encoding scheme = binary **7E 0A 04 38 38 38 38 38 38 38 38 38 38**

The above message body content is a binary representation of the DSS1 UUS information elements;

The above content may also be parsed into us-ascii mode description for encapsulation. For a DSS1 information elements containing content "7E 0A 04 38 38 38 38 38 38 38 38 38 38", according to the definition the structure of the CC layer information elements, the binary stream 7E identifies UUS information elements, 0A identifies the information elements length, 04 identifies the protocol discriminator, and the rest of the content is UUS data information. The above content may be converted into information in us-ascii mode via such resolution as described bellow:
Content-type: application/DSS1-IE; version= ITU-T; Encoding scheme = us-ascii UUS,pd=0f,dat=38 38 38 38 38 38 38 38 38 38

Wherein, UUS identifies the information elements name, pd is the protocol discriminator, and dat is the UUS data information.

The above underlined part is the UUS information elements of CC layer signaling added to the information body.

An example of the message is shown as follows:
INVITE sip:8880008@ RNS.example.com SIP/2.0
   Via: SIP/2.0/UDP acess.example.com
   From: sip:8880006@agl.example.com
   To: sip:8880008@RNS.example.com
   Call-ID: 12345678908888888888@example.com
   CSeq: 1234 INVITE
   Contact: <sip:8880006@example.com>
   Content-Length: 385
   MIME-Version: 1.0
   Content-Type: application/SDP; charset=ISO-10646
   v=0
   o=audet 2890844526 2890842807 5 IN IP4 132.172.62.2
   s=SDP example
   c=IN IP4 access.example.com
   t= 2873397496 2873404696
   m=audio RTP/AVT 8
   a= -
   b= 12kbit/s
Content-type: application/DSS1-IE; version= ITU-T; Encoding scheme = binary **7E 0A 04 38 38 38 38 38 38 38 38 38 38**

3. A service emulation control unit receives the SIP message, analyzes the message and the information in the message body, and determines whether the subscriber has the UUS 1 service authority according to the registration data of the subscriber. Because the UUS information elements is an end-to-end transferred information, this message is transparently transferred to the SIP subscriber adaptation node of the called subscriber (i.e., remote subscriber B of served subscriber A). If the subscriber has no service authority, the service emulation control unit will delete the above UUS information encapsulated in the message body.

4. The destination SIP subscriber adaptation node analyzes the message content, translates the SIP INVITE message into a radio CC layer SETUP message, identifies the SIP message body content, maps the INVITE message to a SETUP message of the radio CC layer according to an existing method, identifies the radio CC layer information elements carried in the SIP message body, extracts the radio CC layer information elements and adds it to the SETUP message, and then sends the SETUP message to the ISDN terminal B, thereby realizing the UUS1 service.

Additionally, it should be noted that, in a mobile communication network, the L2 and L3 (network layer) of an Um interface of the Mobile Station access network in the traditional circuit domain is an transplantation application of a User Network Interface (UNI) of an ISDN network to the mobile communication network; the L2 data link layer of the Um interface is based on modification of the D-channel link access protocol of ISDN; the SS provided in the Connection Management (CM) sub-layer of the L3 is also based on various ISDN SSs. The CM sub-layer is transferred to a Mobile Switching Centre (MSC) via a radio access network and terminated. If the radio access network is linked to the packet core network via adaptation at this point, apparently the CM sub-layer information may be encapsulated in an SIP message. In other words, the above described system and method for transferring digital subscriber signaling are also applicable to link a mobile terminal of the traditional circuit domain to a packet core network that uses SIP as call control signaling. And the object of providing basic services and supplementary services to the mobile terminal via the packet core network may be achieved by encapsulating an integral CM unit or part of the CM unit in the SIP message body. Moreover, because the CM sub-layer further includes a CC unit and an SS unit, etc., an integral CC unit/SS unit or part of the content in a CC unit/SS unit may be encapsulated in the SIP message body.

Therefore, the ISDN terminal in the embodiments of the present invention includes the mobile terminal of the traditional circuit domain; the ISDN service includes the basic service and supplementary service of the mobile terminal in the traditional circuit domain; the digital subscriber signaling includes DSS1, and CM sub-layer signaling of a radio interface.

With the system and method for transferring digital subscriber signaling according to the embodiments of the present invention, when an ISDN terminal accesses a packet core network that uses SIP as call control signaling, digital subscriber signaling L3 protocol information may be transferred between the ISDN terminal and the ISDN service emulation control unit by carrying an integral digital subscriber signaling L3 message or part of the information elements of the L3 message in the SIP message body, so that an ISDN emulation service may be realized and the object of inheriting ISDN services in the packet network is achieved.

Fixed and mobile digital subscriber signaling L3 information may be described using the same media type of the SIP message body, and it may also be described using different media types of the SIP message body.

It should be noted that the above description to the embodiments is detailed, but it can not be deemed as limitation to the scope of the present invention. The scope of the present invention is defined by the appended claims.

## Claims

1. A system for transferring digital subscriber signaling comprising at least one ISDN terminal and a packet core network, wherein the packet core network at least comprises an ISDN service emulation control unit, and wherein:
a Session Initiation Protocol subscriber adaptation node is set between the ISDN terminal and the packet core network, and the ISDN terminal is linked with the ISDN service emulation control unit via the Session Initiation Protocol subscriber adaptation node;
the ISDN service emulation control unit is adapted to provide an ISDN service control function and a network resource control function; and
the Session Initiation Protocol subscriber adaptation node provides signaling adaptation between the digital subscriber signaling protocol and the Session Initiation Protocol by message mapping and/or by encapsulating a digital subscriber signaling message into the message body of the Session Initiation Protocol.

2. The system according to claim 1, wherein the Session Initiation Protocol subscriber adaptation node comprises:
a first interface adapted to perform a first Session Initiation Protocol message exchange with the packet core network;
a second interface adapted to perform a first digital subscriber signaling message exchange with an ISDN Terminal Equipment;
a message receiving unit adapted to receive the first Session Initiation Protocol message transferred by the first interface and the first digital subscriber signaling message transferred by the second interface;
a message processing unit, in connection with the message receiving unit, for encapsulating or mapping content of the first digital subscriber signaling message from the message receiving unit into a second Session Initiation Protocol message, or generating a second digital subscriber signaling message from the received first Session Initiation Protocol message; and
a message sending unit in connection with the message processing unit for sending the second Session Initiation Protocol message or the second digital subscriber signaling message from the message processing unit to the first interface and the second interface.

3. A method for transferring digital subscriber signaling applicable in a packet core network that uses Session Initiation Protocol as call control signaling comprising:
receiving, by a Session Initiation Protocol subscriber adaptation node of a served subscriber, a digital subscriber signaling message, encapsulating related information of the digital subscriber signaling message in the message body of a Session Initiation Protocol message, and sending the information to an ISDN service emulation control unit of the served subscriber via the Session Initiation Protocol message;
receiving, by an ISDN service emulation control unit of the served subscriber, the Session Initiation Protocol message encapsulated with the digital subscriber signaling information, performing service process on the Session Initiation Protocol message, and sending the processed Session Initiation Protocol message to the Session Initiation Protocol subscriber adaptation node of the served subscriber or a Session Initiation Protocol subscriber adaptation node of a remote network; and
translating, by the Session Initiation Protocol subscriber adaptation node of the served subscriber or the remote network, the processed Session Initiation Protocol message into a digital subscriber signaling message, and sending the digital subscriber signaling message to the corresponding ISDN terminal.

4. The method according to claim 3, wherein encapsulating the related information of the digital subscriber signaling message in the message body of the Session Initiation Protocol message comprises:
encapsulating the received digital subscriber signaling message in the message body of the Session Initiation Protocol message; or
encapsulating the information elements contained in the received digital subscriber signaling message in the message body of a Session Initiation Protocol message.

5. The method according to claim 3, wherein, prior to encapsulating the related information of the digital subscriber signaling message in the message body of the Session Initiation Protocol message, the method further comprises:
parsing a received binary digital subscriber signaling message, and describing the information elements in the digital subscriber signaling message or the digital subscriber signaling message in us-ascii mode.

6. The method according to claim 3, wherein translating the Session Initiation Protocol message into the digital subscriber signaling message comprises:
extracting the content of the message body if the content in the message body of the Session Initiation Protocol message is a binary digital subscriber signaling message or an information element.

7. The method according to claim 3, wherein translating the Session Initiation Protocol message into the digital subscriber signaling message further comprises:
parsing the digital subscriber signaling information in us-ascii mode and constructing a binary digital subscriber signaling message if the content in the message body of the Session Initiation Protocol message is digital subscriber signaling information in us-ascii mode.

8. The method according to any one of claims 3 to 7, wherein the encapsulation is implemented by adding a new media type in the Session Initiation Protocol message body or extending the existing media type.

9. The method according to claim 8, wherein the encapsulation comprises binary-mode encapsulation and us-ascii mode encapsulation, which are implemented via a coding/decoding indication field in the media type description.

10. The method according to claim 3, wherein the digital subscriber signaling comprises: Digital Subscriber Signaling No.1, and/or radio interface Connection Management signaling.

11. An apparatus for transferring digital subscriber signaling applicable in a packet core network that uses Session Initiation Protocol as call control signaling comprising:
a first interface, adapted to perform a first Session Initiation Protocol message exchange with the packet core network;
a second interface, adapted to connect an ISDN terminal equipment and perform a first digital subscriber signaling message exchange with an ISDN Terminal Equipment;
a message receiving unit, adapted to receive the first Session Initiation Protocol message transferred by the first interface and the first digital subscriber signaling message transferred by the second interface;
a message processing unit, in connection with the message receiving unit, for encapsulating or mapping content of the first digital subscriber signaling message from the message receiving unit into a second Session Initiation Protocol message, or generating a second digital subscriber signaling message from the received first Session Initiation Protocol message; and
a message sending unit, in connection with the message processing unit, for sending the second Session Initiation Protocol message or the second digital subscriber signaling message from the message processing unit to the first interface and the second interface.

12. The apparatus according to claim 11, wherein the first interface is a Session Initiation Protocol message interface for encapsulating digital subscriber signaling information, and the second interface is a digital subscriber signaling message interface.

13. The apparatus according to claim 12, wherein the digital subscriber signaling message interface is a network layer message interface for transferring digital subscriber signaling No.1 or a Connection Management layer message interface for transferring radio interface signaling.

14. The apparatus according to claim 12, wherein the digital subscriber signaling information of the first interface comprises a binary digital subscriber message or information elements, or a digital subscriber signaling message or information elements described in us-ascii mode.
